(19) Europäisches Patentamt
European Patent Office
Office européen des brevets

(11) Publication number: 0 281 495 A2

(12) # EUROPEAN PATENT APPLICATION

(21) Application number: 88630033.4

(22) Date of filing: 22.02.88

(51) Int. Cl.4: C 08 F 8/20
C 08 F 12/18

(30) Priority: 24.02.87 US 18260

(43) Date of publication of application: 07.09.88 Bulletin 88/36

(84) Designated Contracting States: BE DE FR GB IT NL

(71) Applicant: THE GOODYEAR TIRE & RUBBER COMPANY
1144 East Market Street
Akron, Ohio 44316-0001 (US)

(72) Inventor: Parker, Dane Kenton
945 Norwich Avenue, N.W.
Massillon Ohio 44646 (US)

(74) Representative: Weyland, Joseph Jean Pierre
Goodyear International Tire Technical Center Patent Department Avenue Gordon Smith
L-7750 Colmar-Berg (LU)

(54) **Process for the preparation of chloromethylated polystyrenes.**

(57) This invention is concerned with a process for the chlorination of crosslinked polystyrene and soluble uncrosslinked polystyrene resins containing segmers of methylstyrene or ethylstyrene, said process comprising:

1) dissolving or suspending a polymer that contains segmers of methylstyrene or ethylstyrene in an appropriate organic solvent;
2) contacting the dissolved or swollen polymer with an aqueous solution of an alkaline metal hypohalite, said solution having a pH of at least 7.0 but not more than 10;
3) in the presence of a phase transfer catalyst;
4) at a temperature from 0° to 100° C; and
5) isolating the chloromethylated polystyrene.

EP 0 281 495 A2

**Description**

PROCESS FOR THE PREPARATION OF CHLOROMETHYLATED POLYSTYRENES

Technical Field

This invention is directed to a process for the safe and efficient chlorination of polystyrene resins which contains segmers of methylstyrene or ethylstyrene. The process is based upon the use of a phase transfer catalyst such as benzyltriethylammonium chloride and a hypohalite such as sodium hypochlorite.

Background of the Invention

Historically, there have been only two basic methods available for the preparation of the chemically versatile chloromethylated polystyrene resins. The first of these methods involves the direct chloromethylation of polystyrene or crosslinked polystyrene by a chloromethylating agent. The resultant chloromethylated resins are almost always used as an intermediate to produce functionalized polymers for practical applications.

The basic work on direct chloromethylation was concerned with the synthesis of anion-exchange resins and was independently developed by several groups during the early 1950's; see (a) K.W. Pepper et al, J. Chem. Soc., 4097 (1953); (b) Rohm and Haas Co., British Patent 654,706; and (c) Dow Chemical Co., British Patents 662,314, 677,350, and 679,850. Since this early work, many improvements have been directed toward making the process faster, safer, and less expensive. Some of these improvements are disclosed in the following references: (a) J. A. Davies et al, Am. Lab., 16 (11), 122, 124-8, 131 (1984); (b) A. Carpor et al, J. Poly Sci, Polym. Chem. Ed., 22 (1), 269-75 (1984); (c) L. Feistel et al, Plaste Kautsch, 30 (10), 548-9, (1983) and; (d) S Goldstein et al, Ion Exch. Membranes, 1 (3), 135-41 (1973).

Although the majority of functionalized ion-exchange resins continue to be manufactured by variations of the direct chloromethylation route, it became apparent through toxicological studies that the most commonly used chloromethylating reagents (namely chloromethyl methyl ether and bis-chloromethyl ether) were highly carcinogenic. This fact lead to the development of halomethylating agents of lower volatility and toxicity. These less toxic halomethylating agents are disclosed in: (a) A. Warshawsky, U.S. 4,508,700A (1986); and (b) A. Warshawsky, British Poly. J., 16 (4), 234-8, (1984).

The chloromethylation of resins is limited not only by toxicity considerations but also by a secondary chemical reaction which can take place between a chloromethyl group attached to one benzene ring and another aromatic nucleus, $R\text{-}CH_2Cl + RH \rightarrow R\text{-}CH_2\text{-}R + HCl$. In polymeric systems, a reaction of this type gives rise to crosslinking which is difficult to control and represents a serious disadvantage.

It was realized in the mid-1950's that there was an alternative approach to the preparation of chloromethylated resins that didn't involve direct chloromethylation. This second method depended upon the synthesis and subsequent copolymerization of the monomer-vinylbenzyl chloride.

In 1958, a British Patent to Dow Chemical Company (792,859) described what appears to be the first successful synthesis of vinylbenzyl chloride (also known as chloromethyl styrene or VBC). The syntheses, polymerizations, and applications of VBC are described in detail in the J. Mol. Sci. - Rev. Macromol. Chem. Phys. C22 (3), 343-407 (1982-83). Interest in vinylbenzyl chloride (VBC) as an alternative to chloromethylation progressed due to its industrial availability, its ability to produce new polymers, its ability to improve the methods of preparation of useful materials such as chloromethylated polystyrene and the possibility of using it for many nucleophilic substitutions leaving the double bond undamaged.

In an article by G. Hamilton et al, JACS, 105, 7672 (1983), the authors report chlorination of toluene and related compounds in the benzylic position in good yield under phase transfer conditions using an inorganic hypochlorite as the chlorinating agent. The Hamilton et al studies indicated that the relative reactivities per hydrogen for the α-hydrogens of toluene, ethyl benzene and cumene are 1.0, 4.3 and 9.0 respectively. On the surface, these relative reactivities would seem to be unfavorable to the benzylic methyl group chlorination of copolymer resins containing vinyl toluene.

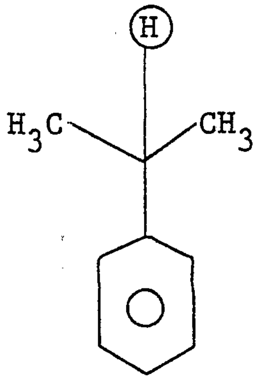

cumene

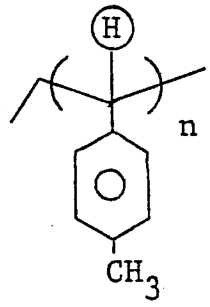

polyvinyltoluene

The circled hydrogens in the formulae above are 9 times more reactive toward chlorination than the methyl group hydrogens. Taking into account the statistical factor that there are 3 times as many methyl hydrogens, one would still expect the backbone (circled) hydrogens to be 3 times more reactive. Unexpectedly, however, I have discovered that a substantial amount of methyl group chlorination will occur with aqueous alkali metal hypohalites under phase transfer conditions on polystyrene resins, especially highly crosslinked macroreticular resins, containing polymerized meta or para-ethyl styrene or mixed m-p-ethyl styrene/p-methyl styrene units.

The process of this invention was most recently reported by Mohanraj et al, Macromolecules 1986, 19, 2470-2472; however, the inventor herein conceived of and reduced to practice the claimed process prior to the effective date of the reference.

Disclosure of the Invention

There is disclosed a process for the chlorination of crosslinked polystyrene and soluble uncrosslinked polystyrene resins or polymers containing segmers of methylstyrene or ethylstyrene, said process comprising:

1) dissolving or suspending a polymer that contains segmers of methylstyrene or ethylstyrene in an appropriate organic solvent;

2) contacting the dissolved or swollen polymer with an aqueous solution of an alkali metal hypohalites, said solution having a pH of at least 7.0 but not more than 10;

3) in the presence of a phase transfer catalyst;

4) at a temperature from 0° to 100° C; and

5) isolating the chloromethylated polystyrene.

Representative of the phase transfer catalysts that are useful in this invention are the organic quaternary ammoniums, and the macrocyclic polyethers.

As specific examples of the organic quaternary ammoniums, there may be given chlorides, bromides, iodides, hydroxides, alkoxides or bisulfates of benzyltriethylammonium, benzyltrimethylammonium, benzyltripropylammonium, phenyltrimethylammonium, phenyltriethylammonium, tetrabutylammonium, tetrapropylammonium, tetraethylammonium, tetramethylammonium, triethylpropylammonium, β-hydroxyethyltrimethylammonium, β-bromoethyltrimethylammonium, 3-phenoxybenzyltriethylammonium, ethyltripropylammonium, methyltrioctylammonium, methyltrimonylammonium and the like. Of these, the chlorides, bromides or hydroxides of benzyltriethylammonium and phenyltriethylammonium are preferred.

As specific examples of the macrocyclic polyethers, there may be given 2,3,11,12-dibenzo-1,4,7,10,13,16-hexaoxacyclooctadecane-2,11-diene(dibenzo-18-Crown-6), 2,3,11,12-dicyclohexyl-1,4,7,10,13,16-hexaoxacyclooctadecane(dicyclohexyl-18-Crown-6), 1,4,7,10,13,16-hexaoxacycloooctadecane(18-Crown-6), 1,4,7,10,13-pentaoxacyclopentadecane(15-Crown-5), 4,7,13,18-tetraoxa-1,10-diazabicyclo(8,5,5)eicosane, 4,7,13,16,21-pentaoxa-1,10-diazabicyclo(8,8,5)-tricosane, 4,7,13,16,21,24-hexaoxa-1,10-diazabicyclo (8,8,8)hexacosane, 5,6-benzo-4,7,13,16,21,24-hexaoxa-1,10-diazabicyclo(8,8,8)hexacosane and the like. Of these, dibenzo-18-Crown-6 is preferred.

These catalysts may be used alone or in combination.

Representative of the solvents useful in this invention to dissolve or suspend the resin are chloroform, dichloroethane, 1,2-dichloropropane, dichloromethane, 1,2-dichloroethene, benzene, carbon tetrachloride, chlorobenzene and o-dichlorobenzene. In general any solvent that will swell or dissolve the resin and be inert towards the phase transfer catalyst and the alkali metal hypohalite will be both useful and suitable.

Representative of the alkali metal hypohalites that are useful in this invention include the hypochlorites, of sodium, potassium, calcium and ammonium.

The concentration of the phase transfer catalyst may vary widely. Usually between 0.1 to 40 mole percent relative to the moles of methyl or ethyl styrene segmer present in the resin are suitable. Most preferred is a

concentration of catalyst between 0.5 and 5 mole percent. The amount of solvent or swelling agent is not critical; however, there should be enough solvent to either dissolve the soluble polystyrene type resins or swell the crosslinked resins. The concentration of the hypohalite solution may vary from 1% to a saturated aqueous solution with a concentration of 2.5 to 12% being preferred. The amount of hypohalite solution should provide a molar excess based on moles of methyl or ethyl styrene segmers present in the resin. Usually a 2:1 molar excess of hypohalite to moles of methyl or ethylstyrene segmers present in the resin is suitable.

The polystyrene resin starting material contains segmers derived from methylstyrene or ethylstyrene. The amount of methyl and/or ethylstyrene segmers may vary over a wide range, however, from 0.1 to 90 mole percent of the methyl and/or ethylstyrene segmers are suitable with from 10-50 mole percent being preferred. The polystyrene resin starting material may be soluble (uncrosslinked) or insoluble (crosslinked). These resins are known in the art. The crosslinked resins and macroreticular resins are produced through the addition of a di- or polyfunctional materials to the polymerization recipe. The di- or polyfunctional materials such as meta or para divinylbenzene, meta or para diisopropenylbenzene and the like are known in the art and the amount of these materials in the polymerization recipe will dictate the level of crosslinking of the resin. These resins and their method of production are well known in the art. The reaction temperature of the process may range from 0 to 100°C or the reflux temperature of the reaction mixture. Usually a temperature from ambient to about 60°C is preferred. The reaction may be conducted under an inert atmosphere, however, it is not necessary.

The present invention will be illustrated in more detail with reference to the following examples, which are not, however, to be interpreted as limiting the invention.

Example 1

Preparation of Macroporous Styrene/Ethylstyrene/Divinylbenzene

To a one liter 3-neck flask fitted with a teflon paddle stirrer, thermometer, nitrogen inlet, condenser and heating mantle was charged 350 ml tap water and 6.0 g Hercules 7M cellulose gum. The mixture was vigorously stirred under nitrogen for 15 minutes to dissolve the cellulose. In a separate 500 ml Erylenmeyer flask were blended 186 ml of benzyl alcohol, 143 g (1.36 moles) of styrene, 2.0 g (0.012 moles), 2,2′-Azobis-(2-methyl) proprionitrile and 47.3 g of 55% mixed m/p divinylbenzene (about .20 moles) with the remainder being mainly m/p ethyl styrene. This mixture was then added all at once to the vigorously stirred water/cellulose mixture under nitrogen at 50°C. The opaque solution was then heated at 85-90°C for 5 hours to complete the polymerization. At the end of this period, the spherical white opaque polymer beads were separated from the reaction by means of a 100 mesh screen. The beads were then thoroughly washed with water and extracted with acetone. After drying 212 g of beads were obtained.

Example 2

Preparation of Styrene/Ethylstyrene/Vinyl Toluene/Divinylbenzene Macroporous Resin

This resin was prepared in an exactly analogous manner to Example 1 except that 0.20 moles of the styrene was replaced with 0.20 moles of vinyl toluene (VT).

After washing, extraction with acetone and drying, 238 g of opaque resin beads were obtained.

Example 3

Phase Transfer Chloromethylation of Example 2 Resin

A 500 ml 3-neck round bottom flask was charged with 10.0 g of the resin from Example 2, 30 ml dichloromethane, 3.4 g (0.001 mole) tetrabutyl ammonium hydrogen sulfate and 100 ml of 12.5% aqueous sodium hypochlorite solution (about 0.16 moles NaClO) which had been previously adjusted in pH to 8-9 by the addition of dilute aqueous HCl. A magnetic stir bar was added and a condenser attached to the system. The reaction is exothermic causing the dichloromethane solvent to reflux. Stirring is continued under ambient conditions for 3 hours before the resin beads were filtered off, washed with water, dichloromethane and acetone. The resin beads were now yellow in color. After drying 8.9 g of product beads were obtained. Samples of resin from Example 2 and Example 3 were submitted for analysis of % chlorine. Results of the chlorine analysis indicated 0% Cl for the resin from Example 2, while Example 3 resin contained 7.48% Cl by weight.

Example 4

Phase Transfer Chloromethylation of Example 2 Resin

A one liter 3-neck round bottom flask equipped with teflon paddle stirrer, thermometer, additional funnel, and condenser was charged with 100 g of Example 2 resin, 400 ml chloroform and 2.27 g (0.001 moles) benzyltriethyl ammonium chloride (BETAC). 200 ml of 2.18 M aqueous sodium hypochlorite solution (about 0.44 moles) adjusted to 8.5 pH was charged to the addition funnel. This solution was slowly added to the stirred resin over a 45 minute period while the temperature slowly rose from 23 to 36°C. The mixture was then stirred at ambient temperature for 6 hours. The beads were then filtered, washed extensively with water and acetone before drying to yield 99.7 g of pale yellow beads. Samples of Example 2 resin and Example 4 resin were

submitted for analysis of % chlorine. Resin from Example 2 indicated 0% Cl while the resin from Example 4 showed 2.66% Cl by weight.

Example 5

Phase Transfer Chloromethylation of Example 1 Resin

This reaction was run in exactly the same manner as Example 4 merely substituting 100 g of Example Resin 1 for 100 g of Example resin 2. It was noted, however, that a stronger exotherm occurred in this case. (It is known that minor differences in resin pore volume, size and distribution can have a major effect on the penetration of reagents, reactivity and ultimate loading of the modified resin.) After filtration, washing and drying, 104 g of pale yellow resin was obtained. Samples of Example resins 1 and 5 were submitted for % chlorine analysis. The analysis indicated 0% Cl for Example 1 resin and 5.11% Cl by weight for the resin from Example 5.

Example 6

Preparation of Quaternary Phosphonium Salt Resin

This reaction was run to demonstrate that some of the chlorine introduced into the resin was in an active benzylic form.

A 250 ml 3-neck round bottom flask equipped with a magnetic stir bar, nitrogen inlet, thermometer and condenser was charged with 5.0 g of Example Resin 4 (2.66% Cl), 4.4 g (0.0217 moles) tri-n-butyl phosphine and 50 ml dimethyl formamide (DMF). The stirred mixture was heated to 120°C for 4 hours under a nitrogen atmosphere. The mixture was then cooled, filtered, washed extensively with DMF and acetone and dried to yield 5.2 g of product resin. Elemental analysis indicates a chlorine content of 1.54% and a phosphorus content of 0.39%. These results indicate that approximately 22% of the chlorine was converted to the phosphonium salt.

Example 7

Preparation of Quaternary Phosphonium Salt Resin

This resin was prepared in an exactly analogous manner to Example resin 6 except that 5.0 g of Example resin 5 was used. After filtering, washing and drying, 4.94 g of product resin was obtained. Analysis of resin indicates 1.80% Cl and 0.24% P. These results indicate that approximately 13% of the chlorine was converted to the phosphonium salt.

Example 8

Preparation of Polymer Bound Macroreticular Anthranilic Acid

A 500 ml 3-neck round bottom flask equipped with a magnetic stir bar, condenser, thermometer, and heating mantle, was charged with 25 g Example resin 3, 5.0 g (0.0365 moles) of anthranilic acid, 5.77 g (0.073 moles) pyridine and 250 ml dimethyl formamide (DMF). The mixture was heated at 75-80°C under nitrogen for 18 hours. The mixture was then filtered warm to remove the functionalized polymer beads. These were then washed extensively with DMF and acetone to remove impurities. After drying 25.0 g of light brown resin was obtained. Analysis of resin shows 1.93% Cl and 0.30% N. These results indicate 28% of the chlorine was converted to the N-alkylated anthranilic acid.

Example 9

Preparation of Polymer-Bound Macroreticular Anthranilic Acid

This resin was prepared in an exactly analogous method to Example Resin 8 except that Example Resin 5 (25 g) was used in place of Example Resin 3. Analysis of product resin indicated 2.33% Cl and 0.32% N.

Example 10

Preparation of Macroreticular Polymer-Bound Palladium Anthranilic Acid Complex

A 500 ml 3-neck round bottom flask equipped with a magnetic stir bar, thermometer, condenser and nitrogen inlet was charged with 20.5 g of Example Resin 8, 0.3 g (0.0017 moles) $PdCl_2$ and 250 ml DMF. The mixture was warmed with stirring to 75-80°C under nitrogen for 18 hours. The resin was then filtered off from the warm mixture, washed extensively with DMF and acetone before drying to obtain 21.0 g of brown resin. This resin was then placed back into a 500 ml 3-neck flask with a magnetic stir bar, $N_2$ inlet and condenser along with 200 ml tetrahydrofuran (THF). After purging with nitrogen, 20 ml of 2M $NaBH_4$ solution in triglyme was added by means of syringe (all at once). The resin rapidly turned black in color with some gas evolution. After stirring for 1 hour at ambient temperature, the activated resin complex was filtered off, washed with THF, acetone/water (90:10), and acetone before drying. Analysis of activated resin indicates 1.76 percent chlorine, 0.20 percent nitrogen, and 0.19 percent palladium.

Example 11

Preparation of Macroreticular Polymer-Bound Palladium Anthranilic Acid Complex

This resin was prepared in an exactly analogous method to Example Resin 10 except that Example Resin 9 (20.5 g) was used. Analysis of product resin indicated 1.92% Cl, 0.19% N and 0.18% Pd.

Example 12

Hydrogenation of N-(4-anilinophenyl) Methacrylamide Using Example Resin 10 as Catalyst

Charge a 500 ml Parr hydrogenation bottle with 25.2 g (0.10 mole) N-(4-anilinophenyl) methacrylamide, 200 ml methanol and 20.0 g of activated Example 10 resin (catalyst). Attach bottle to Parr low-pressure hydrogenation apparatus. Evacuate bottle briefly before repressuring to 45 psig with hydrogen. Heat mixture under hydrogen at 135°F for 5 hours. After pressure drops ceases (about 8 psig total drop), the bottle was vented and the catalyst (still black) filtered off. The methanol solution was analyzed by H-NMR and found to be completely reduced to N-(4-anilinophenyl) isobutyramide, m.p. 142-144°C.

Example 13

Hydrogenation of N-(4-anilinophenyl) Methacrylamide Using Example Resin 11 as Catalyst

The reaction was run in an exactly analogous manner to Example 12 except that 19.0 g of Example 11 resin (catalyst) was substituted. A 63% conversion to the hydrogenated product was observed by hydrogen uptake measurements and H-NMR.

The usefulness of this type of polymer-bound catalyst (prepared originally from a resin made with vinylbenzylchloride) is illustrated in U.S. Patent 4,463,191 for reductive alkylation of nitroaromatics with ketones or aldehydes.

Industrial Applicability

As chloromethylated polystyrenes are key intermediates in the preparation of anion-exchange resins and as supports for polymeric reagents and catalysts, a new process for their preparation that is safe and efficient is highly desirable. Through the process described and claimed herein, one can efficently and economically produce chloromethylated polystyrene resins without the attendant problems and limitations of the prior art methodologies.

**Claims**

1. A process for the chlorination of crosslinked polystyrene and soluble uncrosslinked polystyrene resins or polymers containing segmers or methylstyrene or ethylstyrene, said process characterized by:

1) dissolving or suspending a polymer that contains segmers of methylstyrene or ethylstyrene in an appropriate organic solvent;

2) contacting the dissolved or swollen polymer with an aqueous solution of an alkali metal or ammonium hypohalite, said solution having a pH of at least 7.0 but not more than 10;

3) in the presence of a phase transfer catalyst;

4) at a temperature from 0° to 100°C and;

5) isolating the chloromethylated polystyrene.

2. The process of claim 1 characterized in that the phase transfer catalyst is selected from the group consisting of tetrabutylammonium, hydrogen sulfate, benzyltriethylammonium chloride, phenyltriethylammonium chloride and di-benzo-18-Crown-6.

3. The process according to claim 1 characterized in that the organic solvent is selected from the group consisting of dichloromethane, chloroform, dichloromethane, carbon tetrachloride and benzene.

4. The process according to claim 1 characterized in that the polystyrene resin is crosslinked at 0.5 to 75% with a crosslinking agent.

5. The process according to claim 1 characterized in that the alkali metal hypohalite is sodium hypochlorite.

6. The process according to claim 1 characterized in that the polystyrene resin is crosslinked at 2 to 30% with a crosslinking agent selected from divinylbenzene and diisopropenylbenzene.

7. The process according to claim 1 characterized in that the phase transfer catalyst is selected from the group consisting of chlorides, bromides, iodides, hydroxides, alkoxides and bisulfates of benzyltrimethylammonium, benzyltripropylammonium, phenyltrimethylammonium, triethylpropylammonium, and trioctylmethylammonium chloride.

8. The process according to claim 1 characterized in that the phase transfer catalyst is selected from the group consisting of 2,3,11,12-dibenzo-1,4,7,10,13,16-hexaocacyclooctadecane-2,11-diene(dibenzo-18-Crown-6); 2,3,11,12-dicyclohexyl-1,4,7,10,13,16-hexaoxacyclooctadecane(dicyclohexyl-18-Crown-6) and 1,4,7,10,13-pentaoxacyclopentadecane(15-Crown-5).

9. A process for the chlorination of a crosslinked polystyrene containing segmers of methylstyrene or ethylstyrene, said process characterized by:

1) suspending or swelling the crosslinked polystyrene in dichloromethane;

2) contacting the swollen polystyrene with an aqueous solution of sodium hypochlorite, said solution having a pH of 8 to 9;

3) in the presence of tetrabutylammonium hydrogen sulfate;

4) at ambient temperature to 60° C and;

5) isolating the chloromethylated polystyrene.